# EUROPÄISCHE PATENTSCHRIFT

(11) **EP 2 825 424 B1**
(45) Veröffentlichungstag und Bekanntmachung des Hinweises auf die Patenterteilung: **10.05.2017**
(21) Anmeldenummer: 13710298.4
(22) Anmeldetag: 14.03.2013
(51) Int. Cl.: B60R 25/24, H01Q 1/32, G07C 9/00

(54) **SCHLIESSSYSTEM, INSBESONDERE FÜR EIN KRAFTFAHRZEUG**
LOCKING SYSTEM, ESPECIALLY FOR A MOTOR VEHICLE
SYSTÈME DE FERMETURE, EN PARTICULIER POUR UN VÉHICULE À MOTEUR

(30) Priorität: 16.03.2012 DE 102012005183
(43) Veröffentlichungstag der Anmeldung: 21.01.2015
(73) Patentinhaber: Marquardt GmbH, 78604 Rietheim-Weilheim (DE)
(72) Erfinder: FISCHER, Jörg, 78166 Donaueschingen (DE); BÄR, Bernd, 78628 Rottweil (DE)
(74) Vertreter: Otten, Roth, Dobler & Partner mbB Patentanwälte
(86) Internationale Anmeldenummer: PCT/EP2013/000761
(87) Internationale Veröffentlichungsnummer: WO 2013/135381

(56) Entgegenhaltungen:
- EP-A1- 1 478 049
- EP-A1- 1 768 269
- WO-A1-2006/000458
- WO-A1-2008/107430
- DE-A1-102009 054 167

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschlosssysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für die Übertragung der elektromagnetischen Signale. Im bestimmungsgemäßen Betrieb ist zwischen dem Schlüssel und der Steuereinrichtung wenigstens ein Signal als codiertes Betriebssignal zur Authentifikation des Schlüssels übertragbar, so dass nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, dass der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/StopTaste im Armaturenbrett betätigt.

Der ersten Einrichtung ist eine Antenne zur Übertragung wenigstens eines der Signale zugeordnet. Es hat sich nun herausgestellt, dass zum Betrieb der Antenne eine hohe Sendeleistung benötigt wird. Dies ist insbesondere notwendig, damit die Antenne den gesamten Sende-/Empfangs-Bereich für das Fahrzeug abdecken kann. Um genügend Energie hierfür bereit zu halten, wird wiederum eine teuere Batterie mit entsprechender Kapazität für das Fahrzeug benötigt. Außerdem ist die Leistungsobergrenze für den Betrieb der Antenne aufgrund von gesetzlichen Funkzulassungsgrenzen festgelegt und kann nicht beliebig vergrößert werden.

Weiter ist aus der WO 2008/107430 A1 ein Schließsystem bekannt, bei dem wenigstens zwei physikalisch unterschiedliche Antennen für die erste Einrichtung vorgesehen sind. Dabei wird dann jeweils diejenige Antenne betrieben, die die beste Signalqualität aufweist.

Schließlich zeigt die EP 1 478 049 A1 (D2) ein Schließsystem, bei dem die Ortung der zweiten Einrichtung mittels eines elektrischen Feldes erfolgt. Weitere Schließsysteme, bei denen eine Signalübertragung zwischen der ersten und der zweiten Einrichtung erfolgt, sind in der DE 10 2009 054 167 A1 und der WO 2006/000458 A1 beschrieben.

Der Erfindung liegt die Aufgabe zugrunde, das Schließsystem derart weiterzuentwickeln, dass dessen Betrieb mit geringer Sendeleistung ermöglicht ist. Insbesondere soll eine HF(Hochfrequenz)-Abdeckung des Fahrzeugs mit möglichst wenig HF-Sendeleistung erzielt werden.

Diese Aufgabe wird bei einem gattungsgemäßen Schließsystem durch die kennzeichnenden Merkmale des Anspruchs 1 gelöst.

Beim erfindungsgemäßen Schließsystem sind die beiden Antennen räumlich unterschiedlich angeordnet und arbeiten mit unterschiedlichen Frequenzkanälen. Vorteilhafterweise ist dadurch gewährleistet, dass das Signal
eine gute Signalqualität aufweist, und dennoch die Antenne mit dem geringsten Pegel sendet. Weiterhin ist vorteilhaft, dass die bisherigen Überreichweiten des Schließsystems von aktuell mehr als 180 m auf wenige Meter bei gleichem Komfort reduziert werden. Weitere Ausgestaltungen der Erfindung sind Gegenstand der Unteransprüche.

In einer Weiterbildung sendet die erste Einrichtung ein erstes elektromagnetisches Signal für die zugehörige, beispielsweise als Transponder- und/oder Funkschlüssel ausgebildete zweite Einrichtung als Wecksignal. Dadurch wird die zweite Einrichtung aus einem Ruhezustand mit verringertem Energiebedarf in einen aktivierten Zustand für den bestimmungsgemäßen Betrieb übergeführt. Die erste Einrichtung kann nach Aussenden des ersten elektromagnetischen Signals ein Bereichsabgrenzungssignal als drittes elektromagnetisches Signal senden, mit dessen Hilfe die zugehörige zweite Einrichtung deren Standort in Bezug auf die erste Einrichtung am und/oder im Kraftfahrzeug bestimmen kann. Der Standort der zweiten Einrichtung in Bezug auf die erste Einrichtung am und/oder im Kraftfahrzeug wird anschließend mit einem vierten Signal als Rückantwortsignal von der zweiten zur ersten Einrichtung gesendet. Sind diese Signale erfolgreich übermittelt, so wird schließlich die Authentifikation der zweiten Einrichtung mittels weiterer fünfter Signale als codierte Betriebssignale durchgeführt. Sind somit die für das Wecken sowie die Bereichsabgrenzung notwendigen Vorbedingungen nicht erfüllt, so wird die an sich aufwendige Authentifikation gar nicht durchgeführt, womit eine effizientere Betriebsweise für das Schließsystem ermöglicht ist. Das der Authentifikation dienende fünfte elektromagnetische Signal kann schließlich in einer die Diebstahlsicherheit erhöhenden bidirektionalen Kommunikation bestehend aus mehreren Teilsignalen zwischen der ersten und der zweiten Einrichtung übertragen werden.

Zwischen dem Weck- und dem Bereichsabgrenzungssignal kann von der ersten Einrichtung ein zweites elektromagnetisches Signal als Selektionssignal gesendet werden, das insbesondere eine Information zur Identität des Kraftfahrzeugs enthält. Mit Hilfe des Selektionssignals kann der Dialog mit der zweiten Einrichtung bereits dann frühzeitig abgebrochen werden, wenn die zweite Einrichtung zu einem anderen Kraftfahrzeug, das gegebenenfalls jedoch vom gleichen Kraftfahrzeug-Typ ist, zugehörig ist. Somit werden lediglich demselben Kraftfahrzeug-Typ zugeordnete zweite Einrichtungen aktiviert und/oder verbleiben im aktivierten Zustand sowie im aktivierten Zustand befindliche, nicht zugehörige zweite Einrichtungen werden in den Ruhezustand zurückgeführt. Dadurch ist jeweils eine weitere Steigerung in der Effizienz der Betriebsweise des Schließsystems möglich.

Besonders bevorzugt ist, für das Weck- und/oder das Bereichsabgrenzungssignal ein induktives Signal zu verwenden, indem die Trägerwelle für das erste Signal und/oder das dritte Signal eine im induktiven, niederfrequenten (NF-)Bereich liegende Frequenz aufweist. Aufgrund der begrenzten Reichweite eines induktiven Signals lässt sich somit der Wirkbereich für das Schließsystem auf einfache Art und Weise einstellen. Gleichzeitig wird dadurch die Sicherheit vor Manipulation am Schließsystem durch unberechtigte Benutzer gesteigert. Beispielsweise kann die Frequenz für die NF-Trägerwelle in etwa 20 kHz, 120 kHz, 125 kHz o. dgl. betragen. Weiterhin ist bevorzugt, für das Selektionssignal und/oder das Rückantwortsignal und/oder das codierte Betriebssignal ein Funksignal zu verwenden, indem die Trägerwelle für das zweite Signal und/oder das vierte und/oder das fünfte Signal eine im höherfrequenten (RF- bzw. HF-)Bereich liegende Frequenz aufweist. Dadurch ist aus Komfortgründen für den Benutzer ein vergrößerter Wirkbereich gegeben. Beispielsweise kann die Frequenz für die RF-Trägerwelle beziehungsweise HF-Trägerwelle in etwa 315 MHz, 433 MHz, 868 MHz o. dgl. betragen.

In eine Weiterbildung arbeitet die Antenne auf einem RF- bzw. HF-Frequenzkanal. Es wird dann diejenige Antenne betrieben, bei der die Qualität des von der zweiten Einrichtung empfangenen HF-Signals beziehungsweise RF-Signals eine vorgegebene Mindestanforderung erfüllt. Somit kann die Antenne mit dem geringsten HF-Sende-Pegel beziehungsweise RF-Sendepegel betrieben werden, womit eine erhebliche Energieeinsparung und/oder Reduzierung von Überreichweiten erzielbar ist.

Zwecks Kompaktheit kann die Antenne intern im Fahrzeugsteuergerät angeordnet sein. Es ist jedoch auch möglich, die Antenne extern und damit separat vom Fahrzeugsteuergerät anzuordnen. Die Antenne steht dann in elektrischer Verbindung mit dem Fahrzeugsteuergerät. Eine derartige Anordnung kann sich zur speziellen Anpassung an die Fahrzeuggeometrie anbieten.

In einem ersten Betriebsverfahren, das timingoptimiert arbeitet, werden die Antennen nacheinander angesteuert. Nach Erhalt eines Antwortsignals, also einer Response, von der zweiten Einrichtung wird die Kommunikation zwischen den beiden Einrichtungen mit der ersten von denjenigen Antennen durchgeführt, die von der zweiten Einrichtung ein gültiges Antwortsignal (Response) erhalten hat.

In einem zweiten Betriebsverfahren, das verfügbarkeitsoptimiert arbeitet, senden alle Antennen ein Fragesignal, also eine sogenannte Sync-Botschaft. Das Antwort-Signal der zweiten Einrichtung auf die Fragesignale wird in Bezug auf die Signalqualität ausgewertet. Insbesondere wird die ermittelte HF-Signalqualitat dem Fahrzeug übermittelt. Die Kommunikation zwischen den beiden Einrichtungen wird mit einer von denjenigen Antennen durchgeführt, bei der die Signalqualität eine vorgegebene Mindestanforderung erfüllt.

Für eine besonders bevorzugte Ausgestaltung der Erfindung ist nachfolgendes festzustellen. Geschaffen ist ein HF-LOW-Power-Diversity System über n physikalische Antennen mit n-HF-Frequenzkanälen. Dies erfolgt durch die Verwendung von n unterschiedlichen physikalischen Antennen mit n unterschiedlichen HF-Frequenzkanälen unter Berücksichtung, dass mit geringstem HF-Pegel gesendet wird.

Die mit der Erfindung erzielten Vorteile bestehen insbesondere darin, dass durch die Kombination von unterschiedlichen HF-Frequenzkanälen und unterschiedlichen physikalischen Antennen ein Funksystem, beispielsweise für KeylessGo, mit erheblich weniger Sendeleistung als bisher betrieben werden kann. Neben der erhöhten Störsicherheit bietet dies auch entsprechende Vorteile hinsichtlich der weltweiten Funkzulassungsregelungen. Durch die Unterschiede der Sendefrequenzen und/oder die unterschiedliche räumliche Anordnung der Antennen ergeben sich gegenüber einem Ein-Kanal-Diversity-System signifikant weniger HF-Nullstellen bei gleicher Antennenanzahl.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das eine erste Einrichtung sowie eine zweite Einrichtung aufweisende Schließsystem im Kraftfahrzeug,
- Fig. 3: ein schematisches Blockschaltbild der ersten sowie der zweiten Einrichtung mit einem Diagramm zur Übertragung der Signale,
- Fig. 4: ein Blockschaltbild für das Schließsystem in einer weiteren Ausgestaltung,
- Fig. 5: das Kommunikations-Diagramm für das Schließsystem in einer ersten Version und
- Fig. 6: das Kommunikations-Diagramm für das Schließsystem in einer zweiten Version.

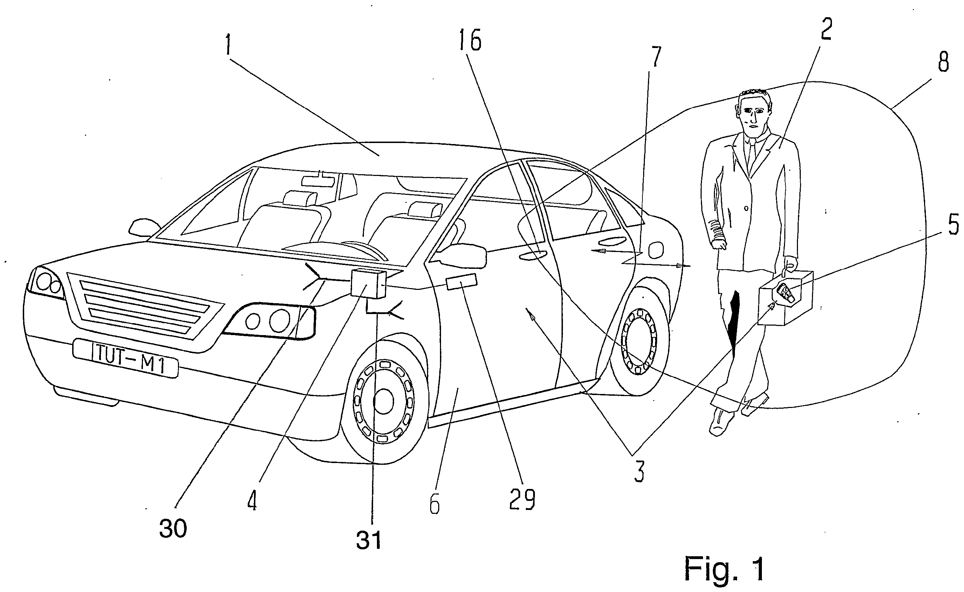

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfasst. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

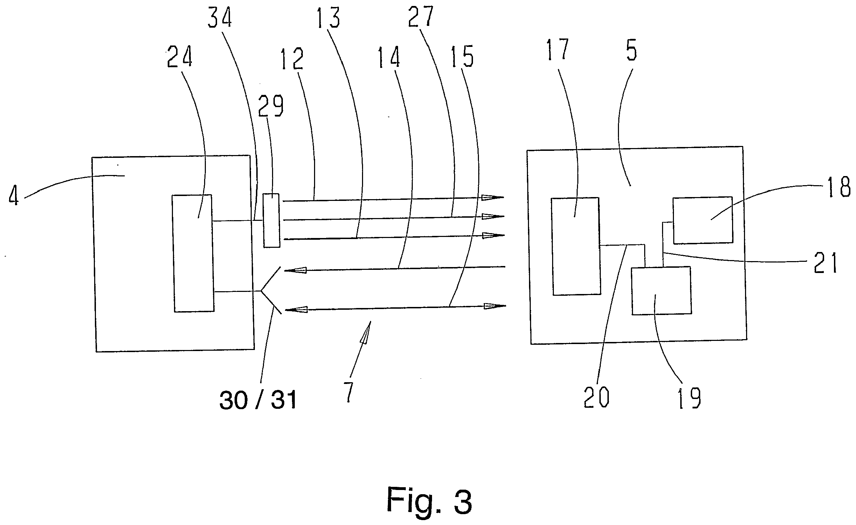

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentifikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer 2 den Wirkbereich 8 verlassen hat.

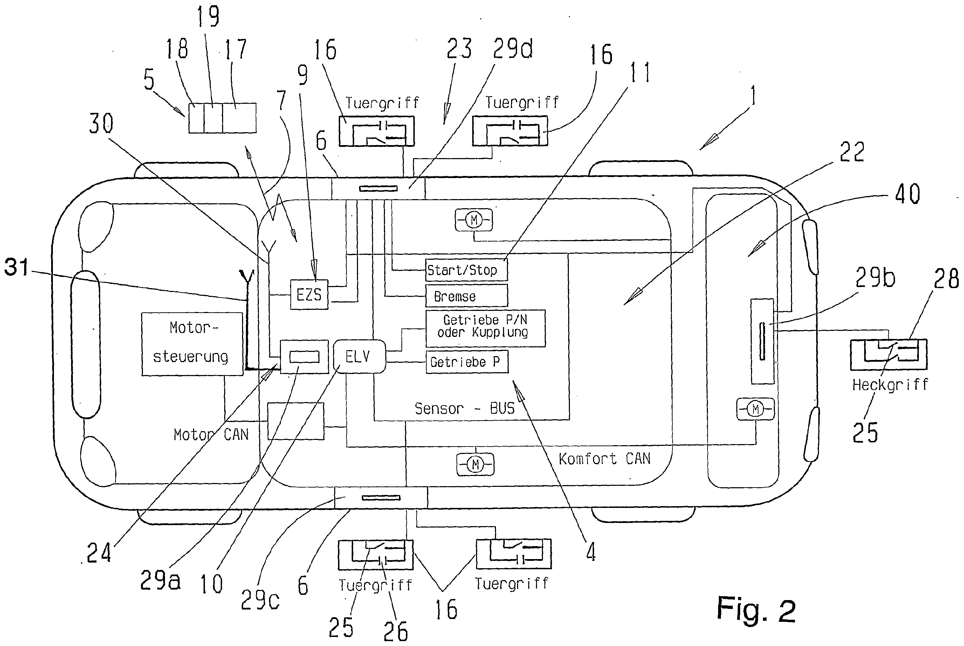

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 (elektronisches Zündschloss EZS) und/oder der Lenkradverriegelung 10 (elektrische Lenkradverriegelung ELV), die in Fig. 2 zu sehen sind. Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentifikation der zweiten Einrichtung 5 erfolgt dann, wenn der berechtigte Benutzer 2 sich im Kraftfahrzeug 1 befindet und einen Start/StopSchalter 11 betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters und/oder eines Sensors vom Benutzer 2 ausgelöst. Für die Zugangsberechtigung kann es sich beispielsweise um die manuelle Betätigung des Türgriffs 16, des Heckgriffs 28 o. dgl. handeln, wie in Fig. 2 zu sehen ist. Hierzu ist im Türgriff 16, Heckgriff 28 o. dgl. des Kraftfahrzeugs 1 ein Schalter 25 angeordnet. Wird ein beispielsweise kapazitiv arbeitender Näherungssensor 26 verwendet, wie ebenfalls in Fig. 2 am Türgriff 16 gezeigt ist, so kann vom Sensor 26 die Annäherung der Hand des Benutzers 2 an den Türgriff 16 bzw. Heckgriff 28 detektiert werden. Für die Fahrberechtigung befindet sich der vom Benutzer 2 manuell betätigbare Start/Stop-Schalter 11 im Kraftfahrzeug 1. Zweckmäßigerweise ist der Start/Stop-Schalter 11 am Gangwahlhebel, am Zündschloss 9, im Armaturenbrett, in der Mittelkonsole o. dgl. im Kraftfahrzeug 1 angeordnet.

Die Funktionsweise des erfindungsgemäßen Schließsystems 3 soll nun anhand der Fig. 3 näher erläutert werden. Zunächst sendet die erste Einrichtung 4 mittels eines Senders/Empfängers 24 als Mittel zum Senden und/oder Empfangen von Signalen ein als Wecksignal bezeichnetes erstes elektromagnetisches Signal 12 für die zugehörige zweite Einrichtung 5. Der ersten Einrichtung 4 ist dabei wenigstens eine Antenne 29, 30 zur Übertragung der Signale 7 zugeordnet. Durch das Wecksignal 12 wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres, drittes elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere lässt sich feststellen, ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Nachfolgend sendet die zweite Einrichtung 5 mittels eines Senders/Empfängers 17 ein die Information zum ermittelten Standort beinhaltendes viertes Signal 14 zur ersten Einrichtung 4, das im folgenden auch als Rückantwortsignal bezeichnet ist. Schließlich wird dann, wie bereits beschrieben, das fünfte elektromagnetische Signal als codiertes elektromagnetisches Betriebssignal 15 zur Authentifikation mittels der Sender/Empfänger 24, 17 zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die zweite Einrichtung 5, die als schematisches Blockschaltbild in Fig. 3 gezeigt ist, weist den Sender/Empfänger 17 als Mittel zum Senden und/oder Empfangen von Signalen und eine beispielsweise aus einem Mikrocomputer bestehende Logikschaltung 18 auf. Weiter ist in der zweiten Einrichtung 5 ein Mittel 19 zur Messung der Feldstärke wenigstens eines von der ersten Einrichtung 4 übertragenen Signals angeordnet. Das Mittel 19 zur Messung der Feldstärke misst die Feldstärke beziehungsweise die Intensität eines der übertragenen Signale, und zwar des Bereichsabgrenzungssignals 13. Zweckmäßigerweise ist das Mittel 19 zur Messung der Feldstärke als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist. Der RSS-Chip 19 erhält über den Eingang 20 das vom Sender/Empfänger 17 jeweils empfangene Signal 13 und erzeugt an seinem RSSI-Ausgang 21 ein in funktioneller Abhängigkeit zur Feldstärke des Signals 13 stehendes RSSI-Signal. Beispielsweise kann das RSSI-Signal proportional oder logarithmisch zur Feldstärke des Signals 13 abhängig sein. Durch entsprechende Auswertung des RSSI-Signals läßt sich dann die Standortbestimmung in der Logikschaltung 18 vornehmen.

Das Wecksignal 12 kann beispielsweise eine Kennung zum Kraftfahrzeug-Typ enthalten. Nach Empfang des Wecksignals 12 sind zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 13 ein zweites elektromagnetisches Signal 27 zur zweiten Einrichtung 5 als Selektionssignal, wie näher anhand von Fig. 3 zu erkennen ist. Das zweite Signal 27 enthält eine Information über die nähere Identität des Kraftfahrzeugs 1. Dadurch wird bewirkt, dass lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentifikation auf, so dass bei Vorhandensein beider Linien im Wirkbereich 8 lediglich eine Authentifikation mit der ranghöheren Linie, die entsprechend ausgewählt wird, durchzuführen ist. Das Selektionssignal 27 kann nun zusätzlich eine Information zu den der ersten Einrichtung 4 zugeordneten Linien enthalten, um dem Schließsystem 3 gegebenenfalls eine Auswahl für die Authentifikation zu gestatten.

Besonders bevorzugt ist, dass die Trägerwelle für das erste Signal 12 als Wecksignal und/oder das dritte Signal 13 als Bereichsabgrenzungsignal eine im induktiven, niederfrequenten (LF- bzw. NF-)Bereich liegende Frequenz aufweist. Beispielsweise kann diese Frequenz in etwa 20 kHz, 120 kHz, 125 kHz o. dgl. betragen. Vorteilhafterweise weist ein solches induktives Signal eine auf die unmittelbare Umgebung des Kraftfahrzeugs 1 oder auf das Kraftfahrzeug 1 selbst begrenzte Reichweite auf. Dadurch wird erreicht, dass die zweite Einrichtung 5 lediglich dann aktiviert wird, wenn sie im Innenraum 22 des Kraftfahrzeugs 1 oder in einem der Wirkbereiche 8 im Außenraum 23 am Kraftfahrzeug 1 befindlich ist, womit Störungen und/oder Sicherheitslücken durch Überreichweiten vermieden sind. Aufgrund der begrenzten Reichweite von induktiven Signalen ist den jeweiligen Bereichen des Kraftfahrzeugs 1 jeweils eine eigene induktive Antenne 29 zugeordnet, und zwar dem Innenraum 22 die LF-Antenne 29a, dem Heckbereich 40 die LF-Antenne 29b und den Autotüren 16 die LF-Antennen 29c, 29d, wie anhand der Fig. 2 zu erkennen ist. Falls gewünscht kann auch das zweite Signal 27, wie in Fig. 3 gezeigt ist, eine im niederfrequenten (NF-)Bereich liegende Frequenz aufweisen. Es ist jedoch besonders bevorzugt, dass die Trägerwelle für das zweite Signal 27 als Selektionssignal und/oder das vierte Signal 14 als Rückantwortsignal und/oder das fünfte Signal 15 als Betriebssignal eine im höherfrequenten (RF- bzw. HF-)Bereich liegende Frequenz aufweist. Beispielsweise kann diese Frequenz in etwa 315 MHz, 433 MHz, 868 MHz o. dgl. betragen. Aufgrund der größeren Reichweite von höherfrequenten Signalen reicht es aus, eine geringere Anzahl von RF-Antennen 30 im Kraftfahrzeug 1 vorzusehen, wie anhand von Fig. 2 ersichtlich ist.

Wie bereits erwähnt und in Fig. 1 gezeigt ist der ersten Einrichtung 4 eine Antenne 29, 30 zur Übertragung wenigstens eines der Signale 7 zugeordnet. Es ist nun eine weitere Antenne 31 im Kraftfahrzeug 1 vorgesehen. Somit sind wenigstens zwei unterschiedliche physikalische Antennen 30, 31, die räumlich unterschiedlich am Kraftfahrzeug 1 angeordnet sind und/oder mit zwei unterschiedlichen Frequenzkanälen arbeiten, für die erste Einrichtung 4 vorgesehen. Dabei wird jeweils diejenige Antenne 30, 31 betrieben, bei der die Qualität des von der zweiten Einrichtung 5 empfangenen Signals 7 eine vorgegebene Mindestanforderung erfüllt. Damit ist gewährleistet, dass einerseits die Kommunikation zwischen den beiden Einrichtungen 4, 5 eine gute Signalqualität aufweist, und dass andererseits die Einrichtung 4 mit dem geringstmöglichen Pegel sendet.

Bei der Antenne 30, 31 handelt es sich insbesondere um eine solche, die auf einem HF-Frequenzkanal arbeitet. Es wird dann diejenige Antenne 30, 31 für die Kommunikation zwischen den beiden Einrichtungen 4, 5 betrieben, bei der die Qualität des von der zweiten Einrichtung 5 empfangenen HF-Signals eine vorgegebene Mindestanforderung erfüllt. Damit kann also die Antenne 30, 31 ohne Qualitätseinbußen mit einem geringen HF-Sende-Pegel betrieben werden.

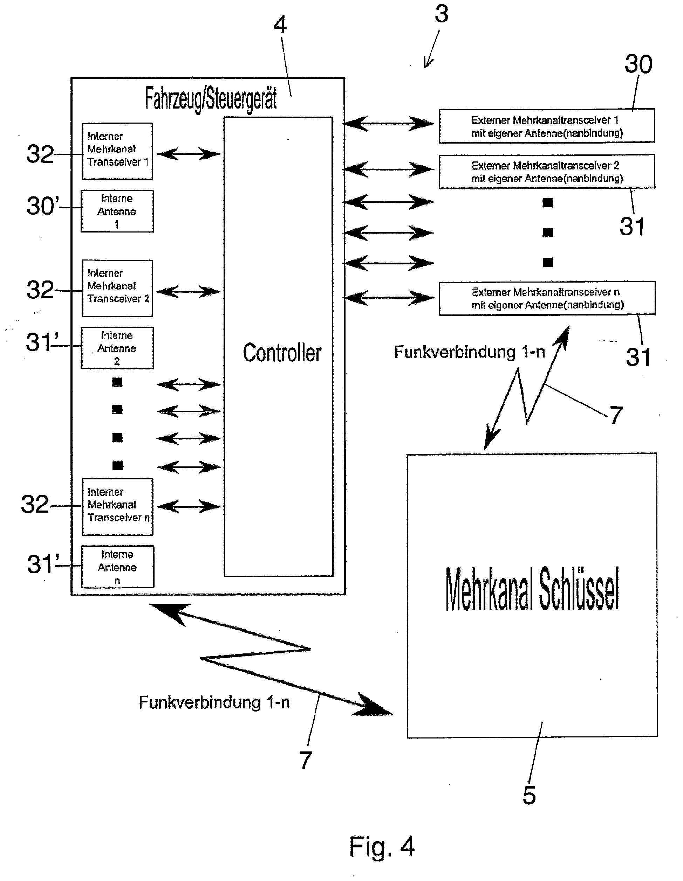

Wie anhand von Fig. 1 zu erkennen ist, ist die Antenne 30, 31 extern und damit separat vom Fahrzeugsteuergerät 4 angeordnet. Allerdings steht die Antenne 30, 31 in elektrischer Verbindung mit dem Fahrzeugsteuergerät 4. Alternativ oder ergänzend ist es auch möglich, wie in Fig. 4 gezeigt ist, dass die Antenne 30', 31' intern im Fahrzeugsteuergerät 4 angeordnet ist. In Fig. 4 sind im übrigen zusätzlich die externen Antennen 30, 31 zu sehen.

Zum Betrieb des Schließsystems 3 gemäß einem ersten Verfahren, das timingoptimiert arbeitet, werden die Antennen 30, 31 nacheinander angesteuert. Nach Erhalt eines Antwort-/Response-Signals von der zweiten Einrichtung 5 wird die Kommunikation zwischen den beiden Einrichtungen 4, 5 mit der ersten von denjenigen Antennen 30, 31 durchgeführt, die von der zweiten Einrichtung 5 ein gültiges Antwort-/Response-Signal erhalten hat. Zum Betrieb des Schließsystems 3 gemäß einem zweiten Verfahren, das verfügbarkeitsoptimiert arbeitet, senden alle Antennen 30, 31 ein Fragesignal in der Art einer Sync(Synchronisations)-Botschaft. Das Antwort-Signal des Schlüssels 5 auf die Fragesignale, das die HF-Signalqualität dem Fahrzeug 1 übermittelt, wird in Bezug auf die Signalqualität ausgewertet. Die Kommunikation zwischen den beiden Einrichtungen 4, 5 wird mit einer von denjenigen Antennen 30, 31 durchgeführt, bei der die Signalqualität eine vorgegebene Mindestanforderung erfüllt.

Nachfolgend soll das als LOW-Power HF-Diversity System ausgestaltete Schließsystem 3 anhand der Fig. 4 noch näher erläutert werden. Das Schließsystem 3 arbeitet über n physikalische Antennen mit n HF-Frequenzkanälen mit möglichst wenig Sendeleistung. Der Aufbau des Systems kann über abgesetzte Funk-Module geschehen oder über auf dem Steuergerät 4 integrierte HF-Transceiver 32. Einzige Bedingung ist, dass der Empfang der Signale gleichzeitig möglich ist und TX(Sende)-seitig eine separate Selektion vorgenommen werden kann. Das System ist bezüglich der Baudrate flexibel, d.h. die TX(Sende)-Baudrate kann sich von der RX(Empfangs)-Baudrate unterscheiden, muss dies aber nicht. Das System funktioniert Baudraten-unabhängig, diese haben lediglich einen Einfluss auf das Gesamtsystem-Timing. Ebenso ist die Trägerfrequnz des HF-Signals irrelevant, d.h. die Kommunikation kann sowohl auf 433 / 868 / 315 MHz als auch z.B. im GHz-Bereich erfolgen.

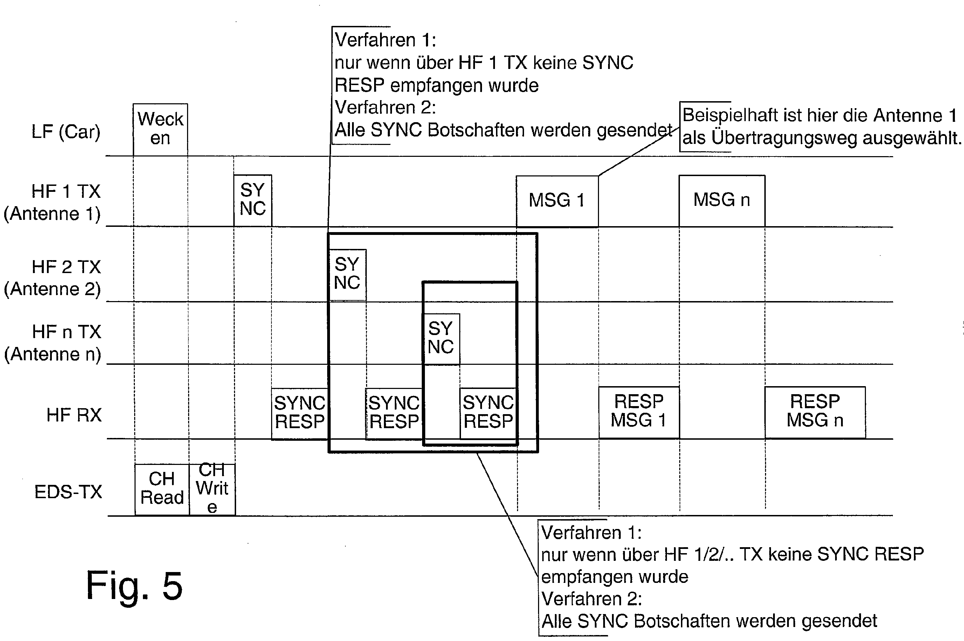

In Fig. 5 ist das Kommunikations-Diagramm für das Schließsystem 3 in einer ersten Version 1 näher zu sehen. Zur HF-Kanalsynchronisation erfolgt die Kanalvorgabe durch das Fahrzeug 1 (KeylessGo-Steuergerät KG / Bodycomputer BCM o. dgl. oder Antennenmaster / Antennenmodul). Zur Gültigkeit einer Response-Message (MSG) vom Schlüssel 5 muss die Checksumme stimmen und die HF-Signalqualität muss bestimmte Mindestanforderungen erfüllen.

### Verfahren 1 (Timingoptimiert):

Sobald eine Response vom Schlüssel 5 erhalten wurde, beginnt die eigentliche Kommunikation, d.h. es werden von den n vorhandenen Antennen 30, 31 nur so viele angesteuert bis das Fahrzeug 1 vom Schlüssel 5 eine gültige Response erhalten hat.

### Verfahren 2 (Verfügbarkeitsoptimiert):

Es wird über alle Antennen 30, 31 eine Sync-Botschaft gesendet und die Antwort des Schlüssels 5 wird fahrzeugseitig ausgewertet (HF-Signalqualität wird dem Fahrzeug 1 übermittelt). Anschließend entscheidet das Fahrzeug 1 anhand der vom Schlüssel 5 übermittelten Daten zur Signalqualität über welche der Antennen 30, 31 die TX-Botschaften der nächsten Kommunikation laufen.

Sowohl im Verfahren 1 als auch im Verfahren 2 werden empfangsseitig immer alle n Antennen 30, 31 parallel genutzt, d.h. der Empfang erfolgt über alle Antennen 30, 31 gleichzeitig, Die Auswahl der Empfangsdaten wird über Plausibilisierung im Fahrzeug 1 durchgeführt (z.B. Checksummenverifikation). Sind über mehrere oder alle Antennen 30, 31 die identischen, korrekten Nutz-Daten empfangen worden, wertet das Fahrzeug 1 die HF-Signalqualität aus (wird bei jeder Nachricht vom Schlüssel 5 mitübertragen) und entscheidet dann, welche Sende-Antenne 30, 31 für die nächste Nachricht verwendet wird.

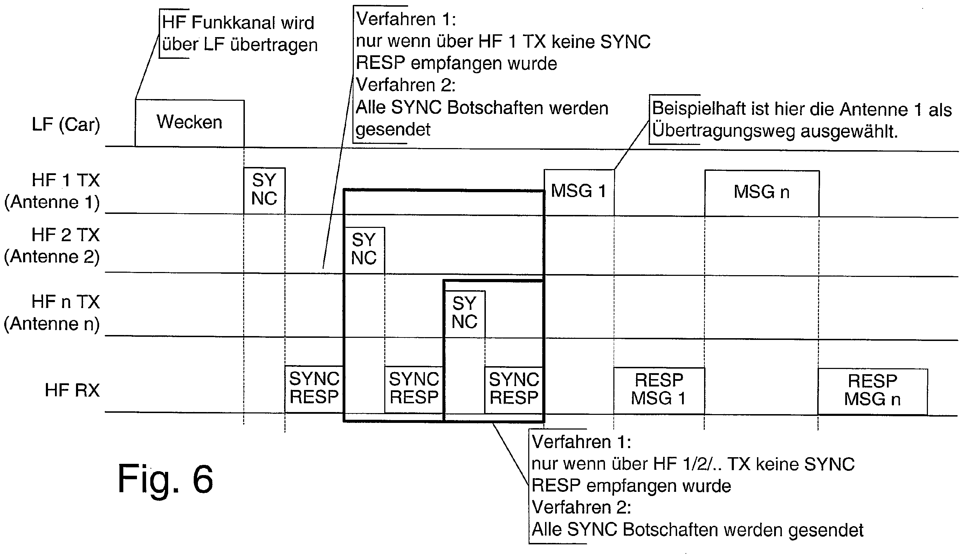

In Fig. 6 ist das Kommunikations-Diagramm für das Schließsystem 3 in einer zweiten Version 2 näher zu sehen. Hier erfolgt die Kanalsynchronisation über LF. Ansonsten ist der Ablauf identisch zu dem in Version 1 beschriebenen Ablauf.

Die Erfindung ist nicht auf das beschriebene und dargestellte Ausführungsbeispiel beschränkt. Die Erfindung umfasst weiterhin auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein Türschloss, das sich beispielsweise an einer Immobilie o. dgl. befindet, oder für sonstige Steuergeräte möglich.

### Bezugszeichen-Liste:

- 1:: Kraftfahrzeug / Fahrzeug
- 2:: (berechtigter) Benutzer
- 3:: Schließsystem
- 4:: erste Einrichtung / Fahrzeugsteuergerät
- 5:: zweite Einrichtung / Schlüssel
- 6:: Autotüre
- 7:: Signal
- 8:: Wirkbereich
- 9:: Zündschloss
- 10:: Lenkradverriegelung
- 11:: Start/Stop-Schalter
- 12:: (erstes) Signal / Wecksignal
- 13:: (drittes) Signal / Bereichsabgrenzungssignal
- 14:: (viertes) Signal / Rückantwortsignal
- 15:: (fünftes) Signal / (codiertes) Betriebssignal
- 16:: Türgriff
- 17:: Sender/Empfänger (in der zweiten Einrichtung)
- 18:: Logikschaltung / Mikroprozessor
- 19:: Mittel zur Messung der Feldstärke / RSS-Chip
- 20:: Eingang (von RSS-Chip)
- 21:: RSSI-Ausgang (an RSS-Chip)
- 22:: Innenraum (vom Kraftfahrzeug)
- 23:: Außenraum (vom Kraftfahrzeug)
- 24:: Sender/Empfänger (in der ersten Einrichtung)
- 25:: Schalter (im Türgriff / Heckgriff)
- 26:: (Näherungs)Sensor (im Türgriff)
- 27:: (zweites) Signal / Selektionssignal
- 28:: Heckgriff
- 29,a,b,c,d:: Antenne / LF-Antenne
- 30,30':: Antenne / RF-Antenne / HF-Antenne
- 31,31':: (weitere) Antenne / HF-Antenne
- 32:: HF-Transceiver
- 40:: Heckbereich (von Kraftfahrzeug)

## Patentansprüche

1. Schließsystem, insbesondere für die Zugangs- und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., und mit einer zugehörigen, in der Art eines elektronischen Schlüssels, eines ID-Gebers, einer Chipkarte o. dgl. ausgebildeten zweiten Einrichtung (5), wobei die beiden Einrichtungen (4, 5) zu deren bestimmungsgemäßen Betrieb Sender und/oder Empfänger (24, 17) für insbesondere elektromagnetische Signale (7) besitzen, wobei es sich insbesondere bei wenigstens einem der zwischen der zweiten Einrichtung (5) und der ersten Einrichtung (4) übertragenen Signale (7) um ein codiertes Betriebssignal (15) zur Authentifikation der zweiten Einrichtung (5) handelt, so dass nach positiver Auswertung des übertragenen Betriebssignals (15) bei berechtigter zweiter Einrichtung (5) eine Änderung des Zustandes der ersten Einrichtung (4) bewirkbar ist, wobei der ersten Einrichtung (4) wenigstens zwei unterschiedliche physikalische Antennen (29, 30, 31) zur Übertragung wenigstens eines der Signale (7) zugeordnet sind, wobei die Antennen (30, 31) auf einem RF- bzw. HF-Frequenzkanal arbeiten, und wobei die Antennen (30, 31) räumlich unterschiedlich angeordnet sind, **dadurch gekennzeichnet, dass** die Antennen (30, 31) mit unterschiedlichen RF- bzw. HF-Frequenzkanälen arbeiten, dass die Signalqualität von der zweiten Einrichtung (5) zum Kraftfahrzeug (1) übermittelt wird, und dass jeweils diejenige Antenne (30, 31) betrieben wird, bei der die Qualität des von der zweiten Einrichtung (5) empfangenen RF- bzw. HF-Signals (7) eine vorgegebene Mindestanforderung erfüllt, derart dass die Antenne (30, 31) mit dem geringsten RF- bzw. HF-Sendepegel betrieben wird.

2. Schließsystem nach Anspruch 1, **dadurch gekennzeichnet, dass** die erste Einrichtung (4) ein erstes Signal (12) für die zugehörige zweite Einrichtung (5) als Wecksignal sendet, derart dass die zweite Einrichtung (5) aus einem Ruhezustand mit verringertem Energiebedarf in einen aktivierten Zustand für den bestimmungsgemäßen Betrieb übergeführt wird, dass vorzugsweise die erste Einrichtung (4) nach Aussenden des ersten Signals (12) wenigstens ein weiteres, drittes Signal (13) als Bereichsabgrenzungssignal sendet, derart dass die zugehörige zweite Einrichtung (5) deren Standort in Bezug auf die erste Einrichtung (4), insbesondere am und/oder im Kraftfahrzeug (1), bestimmen kann, dass weiter vorzugsweise nachfolgend die zweite Einrichtung (5) ein den Standort beinhaltendes weiteres, viertes Signal (14) zur ersten Einrichtung (4) sendet, dass noch weiter vorzugsweise das codierte Betriebssignal (15) zur Authentifikation der zweiten Einrichtung (5) als fünftes Signal (15) zwischen der zweiten Einrichtung (5) und der ersten Einrichtung (4) übertragen wird, wobei das der Authentifikation dienende fünfte elektromagnetische Signal (15) bevorzugterweise in einer bidirektionalen Kommunikation bestehend aus mehreren Teilsignalen zwischen der ersten und der zweiten Einrichtung (4, 5) übertragen wird, und dass nochmals weiter vorzugsweise die erste Einrichtung (4) zwischen dem ersten und dem dritten Signal (12, 13) ein zweites Signal (27) zur zweiten Einrichtung (5) als Selektionssignal sendet, wobei insbesondere das zweite Signal (27) eine Information über die Identität des Kraftfahrzeugs (1) enthält, derart dass zur ersten Einrichtung (4) zugehörige zweite Einrichtungen (5) im aktivierten Zustand verbleiben und im aktivierten Zustand befindliche, nicht zugehörige zweite Einrichtungen in den Ruhezustand zurückgeführt werden.

3. Schließsystem nach Anspruch 1 oder 2, **dadurch gekennzeichnet, dass** die Trägerwelle für das erste Signal (12) und/oder das dritte Signal (13) eine im induktiven, niederfrequenten (LF-)Bereich liegende Frequenz, die beispielsweise in etwa 20, 120, 125 kHz o. dgl. beträgt, aufweist, und dass vorzugsweise die Trägerwelle für das zweite Signal (27) und/oder das vierte Signal (14) und/oder das fünfte Signal (15) eine im höherfrequenten (RF- bzw. HF-)Bereich liegende Frequenz, die insbesondere in etwa 315, 433, 868 MHz o. dgl. beträgt, aufweist.

4. Schließsystem nach einem der Ansprüche 1 bis 3, **dadurch gekennzeichnet, dass** die Antenne (30', 31') intern im Fahrzeugsteuergerät (4) angeordnet ist.

5. Schließsystem nach einem der Ansprüche 1 bis 4, **dadurch gekennzeichnet, dass** die Antenne (30, 31) extern vom Fahrzeugsteuergerät (4) angeordnet ist und in elektrischer Verbindung mit dem Fahrzeugsteuergerät (4) steht.

6. Schließsystem nach einem der Ansprüche 1 bis 5, **dadurch gekennzeichnet, dass** die Antennen (30, 31) nacheinander angesteuert werden, und dass nach Erhalt eines Antwortsignals von der zweiten Einrichtung (5) die Kommunikation zwischen den beiden Einrichtungen (4, 5) mit der ersten von denjenigen Antennen (30, 31) durchgeführt wird, die von der zweiten Einrichtung (5) ein gültiges Antwortsignal erhalten hat.

7. Schließsystem nach einem der Ansprüche 1 bis 6, **dadurch gekennzeichnet, dass** alle Antennen (30, 31) ein Fragesignal senden, dass das Antwort-Signal des Schlüssels (5) auf die Fragesignale in Bezug auf die Signalqualität ausgewertet wird, und dass die Kommunikation zwischen den beiden Einrichtungen (4, 5) mit einer von denjenigen Antennen (30, 31) durchgeführt wird, bei der die Signalqualität eine vorgegebene Mindestanforderung erfüllt.

## Claims

1. A locking system, in particular for the access- and/or driving authorization for a motor vehicle (1) in the manner of a keyless entry/go functionality, with a first device designed as a control device having at least two states, such as a control device for unlocking and/or locking the car doors (6), the ignition lock (9), the steering wheel lock (10), for releasing and/or blocking the immobilizer, the engine control unit or the like, and with an associated second device (5) designed in the form of an electronic key, an ID transmitter, a chip card or the like, wherein the two devices (4, 5) for their intended operation have transmitters and/or receivers (24, 17) for in particular electromagnetic signals, wherein in particular at least one of the signals (7) transmitted between the second device (5) and the first device (4) is a coded operating signal (15) for the authentication of the second device (5), so that after positive evaluation of the transmitted operating signals (15) in the case of an authorized second device a change of the state of the first device (4) can be effected, wherein at least two different physical antennas (29, 30, 31) for the transmission of at least one of the signals (7) are assigned to the first device (4), wherein the antennas (30, 31) operate with different RF or, HF-frequency channels, and wherein the antennas (30, 31) are arranged spatially differently, **characterized in that** the antennas (30, 31) operate with different RF- or HF frequency channels, that the signal quality is transmitted from the second device (5) to the motor vehicle (1), and that in each case that antenna (30, 31) is operated, in which the quality of the RF- or, HF-signal (7) received from the second device (5) meets a predetermined minimum requirement, in such a manner that the antenna (30, 31) is operated with the lowest RF- or, HF transmission level.

2. A locking system according to Claim 1, **characterized in that** the first device (4) sends a first signal (12) for the associated second device (5) as a wake-up signal, in such a manner that the second device (5) is converted from an idle state with reduced energy demand into an activated state for the intended operation, that preferably the first device (4) after sending the first signal (12), sends at least a further, third signal (13) as a range delimitation signal, in such a manner that the associated second device (5) can determine its location in relation to the first device (4), in particular, on and/or in the motor vehicle (1), that further preferably subsequently the second device (5) sends a further fourth signal (14) including the location for the first device (4), that still further preferably the coded operating signal (15) for the authentication of the second device (5) is transmitted as the fifth signal (15) between the second device (5) and the first device (4), wherein the fifth electromagnetic signal (15) serving the purpose of the authentication is preferably transmitted in a bidirectional communication consisting of several sub-signals between the first and the second device (4, 5), and that again further preferably between the first and the third signal (12, 13) the first device (4) sends a second signal (27) to the second device (5) as a selection signal, wherein in particular the second signal (27) contains information about the identity of the motor vehicle (1), in such a manner that second devices (5) associated with the first device (4) remain in the activated state and non-associated second devices in the activated state are returned to the idle state.

3. A locking system according to Claim 1 or 2, **characterized in that** the carrier wave for the first signal (12) and/or the third signal (13) has a frequency in the inductive, low-frequency (LF) range, which, for example, is approximately 20, 120, 125 kHz or the like, and that preferably the carrier wave for the second signal (27) and/or the fourth signal (14) and/or the fifth signal (15) has a frequency in the higher frequency (RF- or HF-) range, which in particular is approximately 315, 433, 868 MHz or the like.

4. A locking system according to any one of Claims 1 to 3, **characterized in that** the antenna (30', 31') is arranged inside the vehicle control device (4).

5. A locking system according to any one of Claims 1 to 4, **characterized in that** the antenna (30, 31) is arranged outside the vehicle control device (4) and is connected electrically with the vehicle control device (4).

6. A locking system according to any one of Claims 1 to 5, **characterized in that** the antennas (30, 31) are successively actuated, and that after receipt of a response signal from the second device (5) the communication between the two devices is carried out with the first of those antennas (30, 31), which has received a valid response signal from the second device (5).

7. A locking system according to any one of Claims 1 to 6, **characterized in that** all of the antennas (30, 31) send an interrogation signal, that the response signal of the key (5) to the interrogation signal is evaluated in regard to the signal quality, and that the communication between the two devices (4, 5) is carried out with one of those antennas (30, 31), in which the signal quality meets a predetermined minimum requirement.

## Revendications

1. Système de fermeture, plus particulièrement pour l'autorisation d'accès et/ou de conduite pour un véhicule à moteur (1) sous la forme d'une fonctionnalité « KeylessEntry/Go », avec un premier dispositif (4), présentant au moins deux états, conçu comme un dispositif de commande, comme un dispositif de commande de déverrouillage et/ou de verrouillage des portières (6), du démarreur (9), du verrouillage du volant (10), pour le déblocage et/ou le blocage du dispositif anti-démarrage, du dispositif de commande du moteur ou autre, et avec un deuxième dispositif (5) correspondant, sous la forme d'une clé électronique, d'un émetteur d'identification, d'une carte à puce ou autre, les deux dispositifs (4, 5) comprenant, pour leur fonctionnement conforme à l'usage prévu, des émetteurs et/ou des récepteurs (24, 17) de signaux, plus particulièrement des signaux électromagnétiques (7), au moins un des signaux (7) transmis entre le deuxième dispositif (5) et le premier dispositif (4) étant un signal de fonctionnement codé (15) pour l'authentification du deuxième dispositif (5), de façon à ce que, après une évaluation positive du signal de fonctionnement (15) transmis, lorsque le deuxième dispositif (5) est autorisé, une modification de l'état du premier dispositif (4) puisse être initiée, le premier dispositif (4) étant muni d'au moins deux antennes physiques (29, 30, 31) différentes pour la transmission d'au moins des signaux (7), les antennes (30, 31) fonctionnant sur un canal de fréquence RF ou HF et les antennes (30, 31) étant disposées différemment dans l'espace, **caractérisé en ce que** les antennes (30, 31) fonctionnent avec des canaux de fréquences RF ou HF différents, **en ce que** la qualité du signal est transmise par le deuxième dispositif (5) au véhicule à moteur (1) et **en ce que** l'antenne (30, 31) pour laquelle la qualité du signal (7) RF ou HF reçu par le deuxième dispositif (5) satisfait une exigence minimale prédéterminée, soit utilisée, de façon à ce que l'antenne (30, 31) avec le niveau d'émission RF ou HF le plus faible soit utilisée.

2. Système de fermeture selon la revendication 1, **caractérisé en ce que** le premier dispositif (4) émet un premier signal (12) pour le deuxième dispositif (5) correspondant en tant que signal d'éveil, de façon à ce que le deuxième dispositif (5) passe d'un état de repos avec une faible consommation d'énergie à un état activé pour le fonctionnement conforme à l'usage prévu, à ce que de préférence le premier dispositif (4), après l'émission du premier signal (12), émette un troisième signal (13) en tant que signal de délimitation de zone, de façon à ce que le deuxième dispositif (5) correspondant puisse déterminer sa localisation par rapport au premier dispositif (4), plus particulièrement sur et/ou dans le véhicule à moteur (1), à ce que de préférence le deuxième dispositif (5) émette ensuite un quatrième signal (14), contenant la localisation, au premier dispositif (4), à ce que de préférence le signal de fonctionnement codé (15) soit transmis, pour l'authentification du deuxième dispositif (5), en tant que cinquième signal (15), entre le deuxième dispositif (5) et le premier dispositif (4), le cinquième signal électromagnétique (15) permettant l'authentification étant transmis de préférence dans une communication bidirectionnelle constituée de plusieurs signaux partiels entre le premier et le deuxième dispositif (4, 5), et à ce que de préférence le premier dispositif (4) émette, entre le premier et le troisième signal (12, 13), un deuxième signal (27) au deuxième dispositif (5), en tant que signal de sélection, plus particulièrement le deuxième signal (27) contenant une information concernant l'identité du véhicule à moteur (1), de façon à ce que les deuxièmes dispositifs (5) correspondant au premier dispositif (4) restent dans l'état activé et les deuxièmes dispositifs non correspondants qui se trouvent dans l'état activé repassent à l'état de repos.

3. Système de fermeture selon la revendication 1 ou 2, **caractérisé en ce que** l'onde porteuse pour le premier signal (12) et/ou le troisième signal (13) présente une fréquence dans le domaine inductif des basses fréquences (LF), qui est égale par exemple à 20, 120, 125 kHz ou autre et **en ce que**, de préférence, l'onde porteuse pour le deuxième signal (27) et/ou le quatrième signal (14) et/ou le cinquième signal (15), présente une fréquence dans le domaine des hautes fréquences (RF ou HF), qui est plus particulièrement égale à 315, 433, 868 MHz ou autre.

4. Système de fermeture selon l'une des revendications 1 à 3, **caractérisé en ce que** l'antenne (30', 31') est disposée à l'intérieur du dispositif de commande du véhicule (4).

5. Système de fermeture selon l'une des revendications 1 à 4, **caractérisé en ce que** l'antenne (30, 31) est disposée à l'extérieur du dispositif de commande du véhicule (4) et est reliée électriquement avec le dispositif de commande du véhicule (4).

6. Système de fermeture selon l'une des revendications 1 à 5, **caractérisé en ce que** les antennes (30, 31) sont commandées les unes après les autres et **en ce que**, après l'obtention d'un signal de réponse provenant du deuxième dispositif (5), la communication entre les deux dispositifs (4, 5) est effectuée avec la première des antennes (30, 31) qui a obtenu un signal de réponse valide en provenance du deuxième dispositif (5).

7. Système de fermeture selon l'une des revendications 1 à 6, **caractérisé en ce que** toutes les antennes (30, 31) émettent un signal de demande, **en ce que** le signal de réponse de la clé (5) aux signaux de demande est évaluée en ce qui concerne la qualité du signal et **en ce que** la communication entre les deux dispositifs (4, 5) est effectuée avec les antennes (30, 31,) pour lesquelles la qualité du signal satisfait une exigence minimale prédéterminée.
